# EUROPEAN PATENT APPLICATION

(11) **EP 2 549 500 A1**
(43) Date of publication of application: **23.01.2013**
(21) Application number: 11005845.0
(22) Date of filing: 16.07.2011
(51) Int. Cl.: H01H 9/52

(54) **Gas-insulated switch gear, especially SF6-insulated panels or switchboards**

(71) Applicant: ABB Technology AG, 8050 Zürich (CH)
(72) Inventor: Wirz, Torsten, 40472 Düsseldorf (DE)
(74) Representative: Schmidt, Karl Michael

(57) **Abstract**

Gas insulated switchgear, especially SF₆-insulated panels or switchboards, comprising a gas insulating enclosure (1) for accommodating switching means, which generates a high temperature during operation, wherein heat sink means are provided for heat dissipation from the enclosure (1) to the ambient, wherein the heat sink means consists of plastic material and comprises inside heat sinks (2) and outside heat sinks (3) arranged in opposite positions on both sides of a wall (4) of the enclosure (1).

## Description

### Field of the invention

The invention relates to gas-insulated switch gears, especially medium voltage SF₆-insulated panels or switchboards, comprising a gas-insulating enclosure for accommodating switching means, which generate a high temperature during operation, wherein heat sink means are provided for heat dissipation from the enclosure to the ambient.

The invention is especially applicable to medium voltage circuit breaker, disconnector and busbar arrangements having an enclosure which is designed as a gas-filled chamber for accommodating a pair of corresponding electrical switching contacts.

### Background of the invention

Along the path of a power grid there are usually provided several electric substations for transmitting and distributing electricity from a power generating source to loads and users connected to the feeding grid. These substations may be configured according to different layouts depending on the applications, for example T-type layouts or HV-type layouts and are realized by using a series of electric components, such as disconnectors, circuit breakers, instrument transformers and control systems.

The document US 2005/0236371 A1 discloses a gas-insulated switch gear device comprising a first casing housing, a first terminal for input/output connection, a disconnector unit comprising a first fixed contact operatively coupled to said first terminal and a corresponding first movable contact which can be electrically connected or disconnected with said first fixed contact during operation of the disconnector unit.

A circuit breaker unit is electrically connected to said disconnector unit and comprising at least a couple of interruption contacts which can be actuated during operation of said circuit breaker unit, between a circuit breaker closed position where they are electrically coupled and a circuit breaker open position where they are electrically separated. Actuating means are provided for operating said disconnector unit and said circuit breaker unit. Furthermore, a second casing operatively coupled with said actuating means is provided, which houses said interruption contacts and on the outer surface of which at least said first movable contact is mounted.

Due to industrial standards the temperature at the electrical contacts inside of gas-insulated switch gear must not exceed defined limits. To assure this, the heat inside the encapsulated gas compartments, generated by ohmic losses in current carrying elements like busbars, has to be dissipated to the ambient. The amount of heat which has to be dissipated is therefore dependent on the nominal current rating of the panel. The generated heat is emitted from the metal bars which usually consist of a copper material to the insulation gas around them and then dissipated through the encapsulation.

For lower ratings of about up to 1250 Ampere the surface of the encapsulation is sufficient to match the required temperature limits. However, for higher ratings of more than 2500 Ampere metal heat sinks are integrated into the encapsulation to dissipate the heat more effectively. These metal heat sinks usually consist of aluminium material and can be part of the encapsulation, having cooling fins on both sides. Alternatively the cooling fins can be also directly welded on the encapsulation. Often the cooling fins do not stick out into the compartment due to dielectric reasons. In that case the heat sink is a protuberance of the encapsulation. Usually, the heat sinks are painted black to increase the heat transfer performance.

Metal heat sinks of the aforementioned kind are expensive due to its complicated manufacturing process and high material investment. If they comprise a volume it has to be tested on tightness separately before assembly to the switch gear. Additionally, the sealing is a potential source of leakage. These heat sinks are heavy and therefore not easy to handle.

The welding of the cooling fins on the inside of the enclosure makes the enclosure bigger than it could be for the dielectrical performance. The welding of heat fins on the inside of the enclosure is a laborious manufacturing process, resulting in a reduction of the insulating distance inside the enclosure.

### Summary of the invention

It is an object of the invention to provide low weight heat sink means for gas-insulated switch gear with a suitable thermal conductivity which are easy to manufacture and to install on the enclosure for heat dissipation to the ambient.

This object is achieved by the subject-matter of the independent claim 1. Further exemplary embodiments are evident from the dependent claims.

According to the invention the heat sink means consist of plastic material and comprises inside heat sinks and outside heat sinks arranged in opposite positions on both sides of the wall of the enclosure.

The invention bases on the recognition, that the main factors of heat dissipation elements are the thermal conductivity which is a material parameter, the surface area which is defined by the design and the heat transmission resistance which is influenced by surface condition or painting. Because of the low temperature difference which is available for heat dissipation of approximately 80°C inside and 40°C outside, the thermal conductivity for dissipation is not the most important factor, but the surface area. Therefore the principle of the present invention is to use plastic heat sinks for this special application which has preferably a thermal conductivity in the range between 0.1-100 W/mK. In the proposed arrangement heat sinks are attached inside and outside the gas enclosure wall.

The special arrangement of the heat sinks provides the favourable effect that the heat is collected from the inside heat sink, conducted by the enclosure wall and dissipated by the outside heat sink to the ambient.

The heat sinks have to be attached to the wall of the enclosure in a way that the heat transfer is assured, preferably by gluing, silicon, silicon-gel or other adhesives. Alternatively it is also possible to clamp, screw or snap the heat sinks to the wall of the enclosure but between the heat sinks and the wall of the enclosure thermal conductive paste should be applied.

The plastic material of the inside heat sinks and outside heat sinks according to the present invention may be electrically conductive or insulating, but preferably flexible. Thus, deformation of the enclosure resulting from pressure changes caused by thermal load cycles can be compensated by deforming of the heat sinks, so no thermal gap can occur

According to another embodiment of the invention further plastic heat sinks can also be attached to a busbar which is arranged inside the enclosure in order to improve the whole heat transfer chain. If insulating plastic material is used, similar insulation capabilities are expected as in a design without any heat dissipation means.

These and other aspects of the invention will be apparent from and elucidated with reference to the embodiments described thereinafter.

### Brief description of the drawings

Below, embodiments of the present invention are described in more detail with reference to the attached drawings.
- Fig. 1: shows an enclosure of a gas-insulated switch gear comprising heat sink means attached to the wall, and
- Fig. 2: shows an enclosure of a gas-insulated switch gear with an inner busbar on which heat sink means are positioned.

The reference symbols used in the drawings, and their meanings, are listed in summary form in the list of reference symbols. In principle, identical parts are provided with the same reference symbols in the figures. All the figures are schematic.

### Detailed description of the embodiments

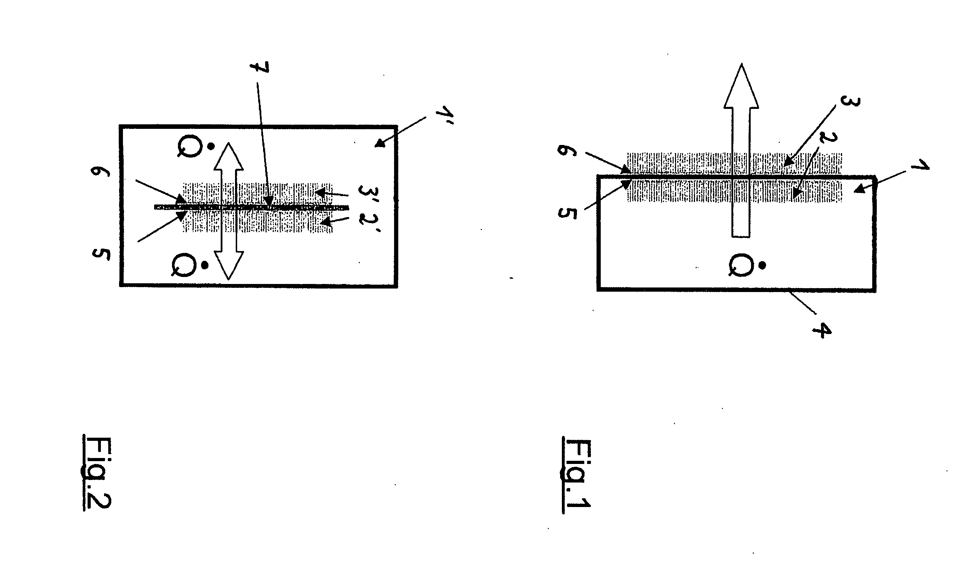

According to Fig. 1 a gas-insulating enclosure 1 is provided for accommodating - not shown - switching means. These switching means usually generate a high temperature during operation. In order to dissipate the generated heat from the enclosure 1 to the ambient special heat sink means are provided which consist of a plastic material comprising of inside heat sinks 2 which directly correspond with outside heat sinks 3 arranged in opposite positions of both sides of wall 4 of the enclosure 1.

The inside heat sinks 2 as well as the outside heat sinks 3 are attached to the wall 4 of the enclosure 1 by gluing. Therefore, a first adhesive layer 5 is positioned between the wall 4 of the enclosure 1 and the inside heat sinks 2. Accordingly, a second adhesive layer 6 is provided between the wall 4 of the enclosure and the outside heat sinks 3.

According to Fig. 2 inside an enclosure 1' an electrical busbar 7 is arranged. Further plastic heat sinks 2' and 3' are attached to the busbar 7 in a manner that the further plastic heat sinks 2' and 3' surround the busbar 7 which is coaxially arranged inside a cylindrical enclosure 1' forming the gas insulating chamber.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from the study of the drawings, the disclosure, and the appended claims.

### Reference symbols

- 1: Enclosure
- 2: Inside heat sink
- 3: Outside heat sink
- 4: Wall
- 5: First adhesive layer
- 6: Second adhesive layer
- 7: Busbar

## Claims

1. Gas insulated switchgear, especially SF₆-insulated panels or switch- and conducting boards, comprising a gas insulating enclosure (1) for accommodating switching and/or conduction means, which generates a high temperature during operation, wherein heat sink means are provided for heat dissipation from the enclosure (1) to the ambient,
**characterized in that** the heat sink means consists of plastic material and comprises inside heat sinks (2) and outside heat sinks (3) arranged in opposite positions on both sides of a wall (4) of the enclosure (1).

2. Gas insulated switchgear according to Claim 1,
**characterized in that** the thermal conductivity of the plastic heat sinks (2, 3) is in the range between 0,1 to 100 W/mK.

3. Gas insulated switchgear according to Claim 1,
**characterized in that** the inside heat sinks (2) and the outside heat sinks (3) are attached to the wall (4) of the enclosure (1) by gluing.

4. Gas insulated switchgear according to Claim 1,
**characterized in that** the inside heat sinks (2) and the outside heat sinks (3) are attached to the wall (4) of the enclosure (1) by clamping, srewing or snaping, wherein a thermal conduction is provided between the wall (4) and the inside heat sinks (2) and the outside heat sinks (3) respectively.

5. Gas insulated switchgear according to Claim 1,
**characterized in that** the plastic material of the inside heat sinks (2) and the outside heat sinks (3) is flexible, in order to compensate deformation of the enclosure (1).

6. Gas insulated switchgear according to Claim 1,
**characterized in that** a further plastic heat sink (2', 3') is attached to a switching or conducting means arranged inside the enclosure (1').

7. Gas insulated switchgear according to Claim 1,
**characterized in that** the further plastic heat sinks (2', 3') surround the busbar (7) or are are attached there.
